# EUROPÄISCHE PATENTANMELDUNG

(11) **EP 0 757 933 A1**
(43) Veröffentlichungstag der Anmeldung: **12.02.1997**
(21) Anmeldenummer: 96111276.0
(22) Anmeldetag: 12.07.1996
(51) Int. Cl.: B23P 15/40, B29B 9/06, B23P 15/28

(54) **Verfahren zur Herstellung von Schneidmessern für die Unterwassergranulierung**

(30) Priorität: 03.08.1995 DE 19528483
(71) Anmelder: Werner & Pfleiderer GmbH, 70469 Stuttgart (DE)
(72) Erfinder: Lambertus, Friedrich, Dipl.-Ing., 70469 Stuttgart (DE)

(57) **Zusammenfassung**

Die Erfindung betrifft ein Verfahren zur Herstellung von Schneidmessern für die Unterwassergranulierung durch mechanisches Zerteilen eines Materialblockes in einzelne, der Dicke der Messer entsprechenden Segmente. Ziel der Erfindung ist es, ein Verfahren anzugeben, mit dem der Kostenaufwand für die Herstellung von Schneidmessern für die Unterwassergranulierung erheblich reduziert werden kann.

Erreicht wird dies mit dem erfindungsgemäßen Verfahren dadurch, daß in einem Stahlblock (2) mehrere Bohrungen (3) eingebracht werden, in welche ein Hartstoff (1) eingebracht und metallisch mit dem Stahlblock (2) verbunden wird. Der Hartstoff kann dabei als Rundmaterial oder in Pulverfom in die Bohrung (3) einbepaßt und in dem bekannten HIP-Verfahren mit dem Stahlblock 2 verbunden werden. Nachfolgend erfolgt eine Zerteilung des Stahlblockes in einzelne Segmente so, daß wenigstens zwei, vorzugsweise vier Messer pro eingebrachtem Hartstoff entstehen.

## Beschreibung

Die Erfindung betrifft ein Verfahren zur Herstellung Von Schneidmessern für die Unterwassergranulierung durch mechanisches Zerteilen eines Materialblockes in einzelne, der Dicke der Messer entsprechenden Segmente.

Bei der Unterwassergranulierung werden bekanntlich die aus den Bohrungen der Düsenplatte austretenden Kunststoffschmelzestränge an der Stirnfläche dieser Düsenplatte unter Wasser von umlaufenden Messern abgeschert. Zur Erzielung eines gratfreien Granulats muß das Messer spaltfrei aufliegen. Eine bestimmte Anpressung der Messer gegen die Düsenplatte ist wegen der in der Granulierkammer auftretenden Wasserströmungsturbulenzen erforderlich. Eine zusätzliche Anpressung bedingt die Notwendigkeit,die Achslagengenauigkeit der Messerwelle zur Stirnfläche, insbesondere bei größeren Anlagen, über ein kardanisches Gelenk im Messerkopf auszugleichen. Außerdem müssen geringe Unebenheiten der Düsenplattenstirnfläche durch die Elastizität der Messer ausgeglichen werden. Dieses erfordert eine weitere, zusätzliche Anpressung. Für einen störungsfreien Betrieb ist somit eine bestimmte Mindestpressung zwischen Messer und Düsenplatte erforderlich.

Bei der Auswahl der Werkstoffe, sowohl lochplattenseitig als auch messerseitig muß somit berücksichtigt werden, daß die beiden Partner unter Wasser mit einer bestimmten Vorspannung und einer bestimmten Geschwindigkeit gegeneinander reiben, die zu granulierenden Kunststoffe, z. T. korrosiv wirkende Anteile aufweisen und eine möglichst lange Standzeit erreicht werden muß. Letzteres weil einerseits die Düsenplatte und die Messer relativ teure Bauteile darstellen und andererseits der Messerwechsel zur Produktionsunterbrechung und somit zu entsprechendem Produktionsausfall führt.

In der Praxis hat sich die Belegung der Düsenplatte mit verschleißfesten Werkstoffen, welche einen bestimmten Anteil von Wolfram- oder Titankarbiden aufweisen, bewährt. Als idealer Partner zu diesen Werkstoffen hat sich bei den vorstehend beschriebenen, besonderen Betriebsbedingungen ein Hartstoff, welcher aus einer speziellen Stahlmatrix und eingelagerten Titankarbiden besteht, erwiesen. Es werden deshalb überwiegend Massivmesser aus diesem Werkstoff hergestellt. Dabei wird ein Massivblock aus diesem Material, der in etwa der Abmessung der gewünschten Messer entspricht, durch mechanisches Trennen (Sägen) in einzelne Segmente zerteilt und anschließend durch weitere mechanische Bearbeitung die gewünschte Messerform gestaltet. Abgesehen davon, daß der Materialpreis relativ hoch liegt, ist auch die Bearbeitung dieses hochwertigen Hartstoffes sehr zeitaufwendig und schwierig.

Es sind auch Messer für die Unterwassergranulierung bekannt, die aus einem Stahlkörper mit einer aus Hartstoff eingesetzten Schneide bestehen. Diese so hergestellten Messer sind in ihrer Herstellung aufwendiger und somit auch nicht kostengünstiger.

Der Erfindung liegt die Aufgabe zugrunde ein Verfahren anzugeben, mit dem der Kostenaufwand für die Herstellung von Schneidmessern für die Unterwassergranulierung erheblich reduziert werden kann.

Diese Aufgabe wird erfindungsgemäß nach den Merkmalen des Anspruches 1 gelöst. Durch das Einbringen von Hartstoff in die Bohrungen eines Stahlblockes und einer nachfolgenden Zertrennung, die so erfolgt, daß mindestens zwei, vorzugsweise vier Messer-Rohlinge pro Rundstab entstehen, wird eine kostengünstige Herstellung dieser hochwertigen Schneidmesser erzielt. Eine kostengünstige Verbindung des Hartstoffes mit dem Stahlblock ist nach den Merkmalen des Anspruches 2 gegeben. Dabei können nach den Merkmalen der Ansprüche 3 und 4 der Hartstoff in Form von Massivstäben oder in Pulverform in die Bohrungen des Stahlblockes eingebracht werden. Mit den Merkmalen des Anspruches 5 sind günstige Voraussetzungen für die Wärmebehandlung gegeben. In Weiterbildung der Erfindung nach den Merkmalen des Anspruches 6 ist eine vorteilhafte Einbringung des Hartstoffes aufgezeigt.

Im folgenden wird die Erfindung anhand eines in der Zeichnung dargestellten Ausführungsbeispiels näher erläutert. Es zeigen
- Fig. 1 -: einen mit Bohrung versehenen Stahlblock in der Draufsicht,
- Fig. 2 -: eine Stirnansicht im Schnitt von Fig. 1,
- Fig. 3 -: eine vergrößerte Darstellung von Fig. 1 im Schnitt mit Sägeschnittlinien und angedeuteter Messerkontur,
- Fig. 4 -: einen vorbereiteten Stahlblock mit Hartstoffgrünlingen,
- Fig. 5 -: Schneidmesser

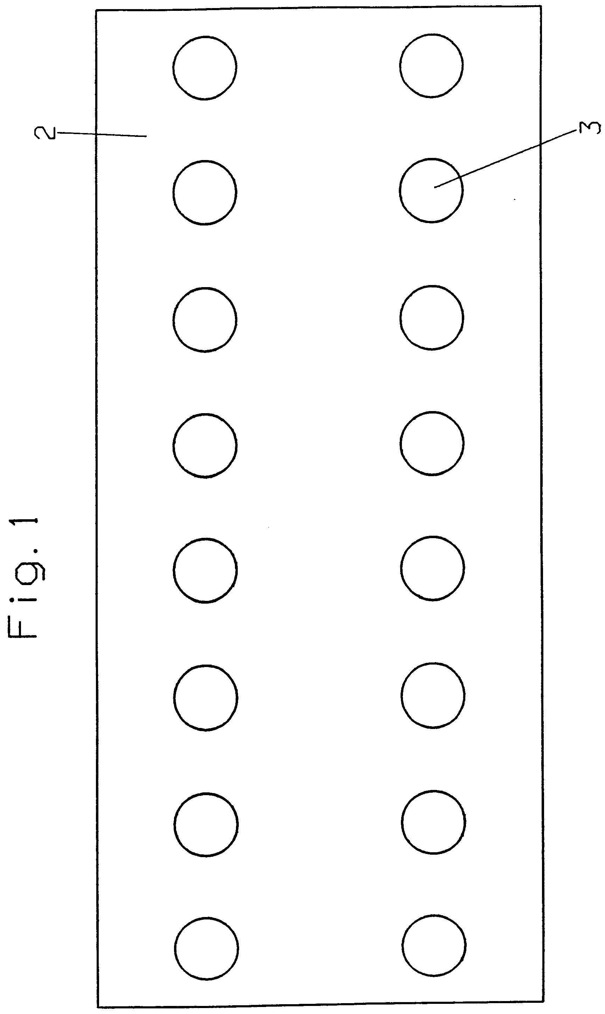

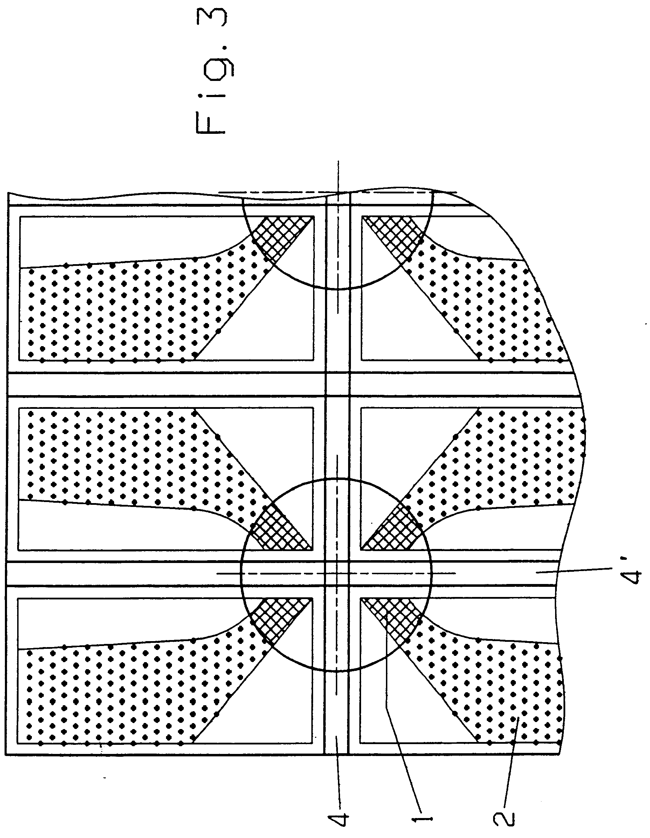

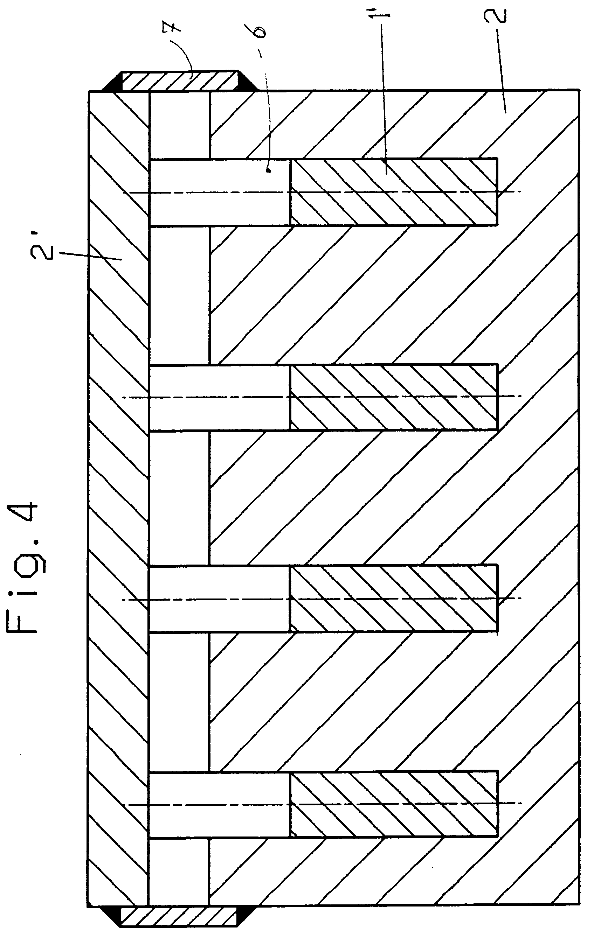

Wie der Figur 1 entnommen werden kann, ist ein Stahlblock 2 mit 16 Bohrungen 3 versehen, die nach einer entsprechenden Zerteilung gemäß Figur 3/4 64 Schneidmesser-Rohlinge für die Unterwassergranulierung liefern.

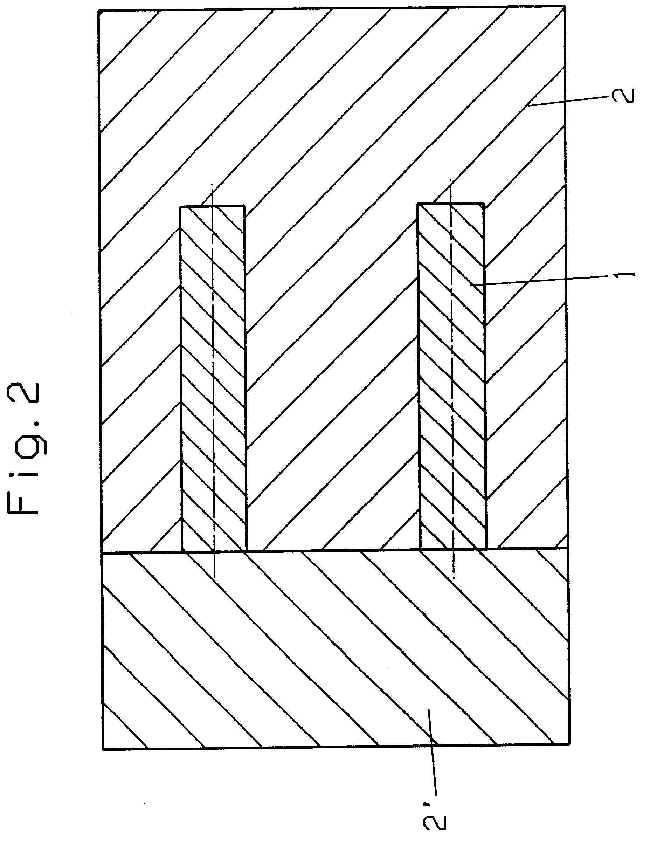

Die Bohrungen 3 können dabei als Durchgangsbohrung oder als Sackbohrung wie in Figur 2 zu erkennen ist, ausgeführt werden. Wenn, wie in Figur 2 dargestellt, Sackbohrungen eingebracht sind, ist nach dem Einbringen des Hartstoffes 1 in die Bohrungen 3 nur noch ein Deckel 2' aus dem gleichen Material aus dem der Stahlblock 2 besteht, einzufügen und mittels des HIP-Verfahrens insgesamt zu verbinden. Dabei entspricht die Tiefe der Sackbohrung 3 gleich der Länge L der Messerschneide. Der Deckel 2' ist dabei nach Maßgabe des Messerschaftes der auf dem Granulierkopf aufgeschraubt wird, bemessen.

In Figur 4 ist die Vorstufe zum Hippen gezeigt, wobei in den Bohrungen 3 des Stahlblockes 2 sogenannte Hartstoffgrünlinge 1' (vorgepreßt) eingebracht sind.

Das erfindungsgemäße Verfahren läuft in folgenden Schritten ab:

Bei der Verwendung von Rundstäben aus Hartstoff 1 werden diese in die Bohrungen 3 des Stahlblockes 2 eingesetzt und anschließend der Deckel 2' aufgesetzt. Bei der Verwendung von Durchgangsbohrungen müssen beidseitig Deckel vor dem HIP-Verfahren aufgesetzt werden. Eine bruchfeste Verbindung zwischen den eingefügten Hartstoffstäben 1 und dem Stahlblock 2 wird durch das an sich bekannte HIP-Verfahren (Heißisostatisches Pressen) erzielt. Somit ist der Einsatz des teuren Hartstoffes 1 auf ein Minimum, nämlich auf den Bereich der Messerschneide begrenzt.

Als Stahlblock, aus dem der Messerkörper entsteht, wird vorzugsweise ein Stahl verwendet, der weitgehend der Matrix des Hartstahls entspricht. Hierdurch wird durch die gemeinsam mit den beiden Werkstoffen durchgeführten Wärmebehandlungen für beide Werkstoffe ein für die mechanische Bearbeitung (Herstellung) günstiger weicher Zustand und für den Produkteinsatz optimal harter Zustand erreicht.

Mit dem Verfahren sind Kosteneinsparungen am Material bis zu 50 % möglich. Der Hartstoff besteht aus einer speziellen Stahlmaterie mit eingelagerten Titankarbiden.

Durch eine günstige Zerteilung, wie in Figur 3 dargestellt, können pro Rundstab vier Messer-Rohlinge erzeugt werden. In Figur 3 sind mit 4/4' die Sägeschnittlinien angedeutet und die punktierte Darstellung zeigt die Endform der Messer nach der weiteren Bearbeitung nach der Zertrennung des Stahlblockes 2.

Eine weitere Variante, die die Kosten noch zusätzlich reduziert, zeigt die Figur 4. Hier wird in die Bohrungen 3 das Ausgangsmaterial des Hartstoffes 1 als Pulvergemisch 1' eingefügt und mit Hilfe einer starken hydraulischen Presse verdichtet. Der Schwund dieses Materials beim Hippen wird durch axial bewegliche Stößel 6, die aus dem gleichen Stahl wie der Stahlblock 2 als Rundkörper gefertigt sind, und einer besonders elastischen und verformbaren Kapselung (Laschen 7) weitgehend kompensiert. Die anschließende Zerteilung dies Blockes nach Figur 4 erfolgt gemäß Figur 3.

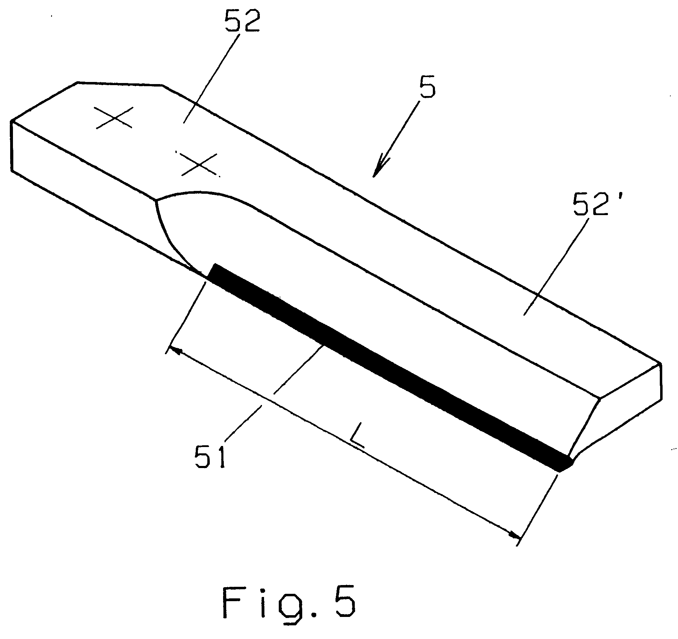

In Figur 5 ist ein nach dem Verfahren hergestelltes Messer 5 gezeigt, wobei der Schaft 52 und die Klinge 52' aus dem kostengünstigen Material des Stahlblockes 2 besteht und nur die Schneide 51' aus dem Hartstoff 1 ausgebildet ist.

## Patentansprüche

1. Verfahren zur Herstellung von Schneidmessern für die Unterwassergranulierung durch Zerteilung eines Materialblocks in einzelne, der Dicke der Messer entsprechende Segmente, dadurch gekennzeichnet, daß in einem Stahlblock (2) mehrere Bohrungen (3) eingebracht werden, in welche Hartstoff (1) eingebracht und metallisch mit dem Stahlblock (2) verbunden wird, wobei die Bohrungen (3) mit dem eingebrachten Hartstoff so angeordnet sind, daß beim Zerteilen des Stahlblockes in einzelne Segmente und der weiteren mechanischen Bearbeitung mindestens zwei Schneidmesser (5) mit einer aus dem Hartstoff bestehenden Schneide (51) entstehen.

2. Verfahren nach Anspruch 1, dadurch gekennzeichnet, daß die metallische Verbindung des Stahlblockes (2) mit dem Hartstoff (1) nach dem ansich bekannten HIP-Verfahren erfolgt.

3. Verfahren nach Anspruch 1, dadurch gekennzeichnet, daß in die Bohrungen (3) Hartstoff (1) in Form von Rundstäben eingesetzt werden.

4. Verfahren nach Anspruch 1 und 2 dadurch gekennzeichnet, daß in die Bohrungen (3) der Hartstoff in Pulverform eingebracht wird.

5. Verfahren nach wenigstens einem der Ansprüche 1 - 4, dadurch gekennzeichnet, daß der Werkstoff des Stahlblockes (2) weitgehend der Matrix des Hartstoffes (1) entspricht.

6. Verfahren nach wenigstens einem der Ansprüche 1 - 5, dadurch gekennzeichnet, daß die Sackbohrungen (3) nach Maßgabe der Schneidenlänge (L) des Messers (5) gestaltet sind.

7. Messer nach wenigstens einem der Ansprüche 1 - 6, dadurch gekennzeichnet, daß der Schaft (52) und Messerklinge (52') aus dem Stahlblock (2) und die Messerschneide (51) aus dem Hartstoff (1) besteht.
